(19) **Europäisches Patentamt**
**European Patent Office**
**Office européen des brevets**

(11) **EP 1 990 650 A1**

(12) **EUROPEAN PATENT APPLICATION**

(43) Date of publication:
**12.11.2008 Bulletin 2008/46**

(51) Int Cl.:
*G01S 3/803* (2006.01)          *G01V 1/00* (2006.01)
*G01S 13/93* (2006.01)

(21) Application number: **07009183.0**

(22) Date of filing: **07.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Harman Becker Automotive Systems GmbH**
**76307 Karlsbad (DE)**

(72) Inventors:
• **Azizi, Seyed-Ali**
**80797 München (DE)**

• **Hess, Wolfgang**
**76307 Karlsbad (DE)**
• **Münch, Tobias**
**75334 Straubenhart (DE)**
• **Nitzpon, Hans-Jürgen**
**76275 Ettlingen (DE)**

(74) Representative: **Bertsch, Florian Oliver et al**
**Kraus & Weisert**
**Patent- und Rechtsanwälte**
**Thomas-Wimmer-Ring 15**
**80539 München (DE)**

(54) **Method and system for determining position information of vehicles**

(57)    A method for determining position information of a vehicle is disclosed, wherein sounds emitted by said vehicle are detected and said position information is determined based on the detected sounds.

FIG. 1

**EP 1 990 650 A1**

**Description**

This invention relates to a method and an apparatus for determining position information of vehicles. In particular, it relates to such a method and such an apparatus which are implemented in a vehicle ("equipped vehicle") to determine position information of one or more further vehicles, for example vehicles overtaking said equipped vehicle.

Position information, in this respect, relates to any information related to the position of a vehicle, for example direction of the vehicle, distance of the vehicle, changing of the position of the vehicle (for example speed of the vehicle) etc..

It should be noted that also more general information like "a vehicle overtaking on the left side" or "a vehicle follow overtaking on the right side" is to be regarded as position information in the context of the present application.

Related Art

In modern vehicles like cars or motorcycles systems are used to assist the driver in driving the vehicle, for example by giving the driver information regarding the surroundings of the vehicle in addition to the view through the windows of the vehicle available to the driver. An example for such driver assist systems are parking assist systems which for example give warning noises if, when in reverse gear, the distance to a further vehicle behind the vehicle equipped with the driver assist system becomes small.

Besides such comparatively simple situations like parking where obstacles like further vehicles often are stationary, it is also desirable to assist the driver during normal travel. For example, one of the dangerous situations when driving are overtaken maneuvers. Therefore, a driver assist system informing a driver of further vehicles overtaking his or her vehicle would be desirable.

In order to provide such information, position information of the further vehicles has to be obtained in order to identify an overtaking maneuver.

Even more advanced systems are so-called autonomous driving systems which drive a vehicle without input from a driver. Also for those systems, information regarding the position of further vehicles has to be obtained.

In the following discussion, as an example it will be assumed that, as mentioned above, the additional information serves to feed a driver assist or autonomous driving system of a vehicle, which in the following will be called "equipped vehicle".

One possibility for determining such position information is to provide the equipped vehicles with one or more cameras taking pictures of the surroundings of the equipped vehicle and use image processing to obtain the desired information from these pictures. However, cameras having the required quality and also the necessary robustness are comparatively expensive, and also the necessary image processing is complex.

Another possibility for determining position information is using radar devices to detect other vehicles. However, such radar devices need emitters emitting radar signals at a given frequency. It is difficult to find a suitable frequency range which is not reserved for other applications. Additionally, radar devices of different vehicles may disturb each other.

Summary

Therefore a need exists to provide a method and an apparatus for determining position information of at lest one vehicle which may be implemented with reduced costs and efforts.

This need is met by a method according to claim 1 and an apparatus according to claim 15. The dependent claims define preferred or advantageous embodiments of the present invention.

The method according to the present invention comprises the steps of detecting sounds and determining position information of at least one vehicle based on said detected sounds.

In other words, sounds, among them sounds emitted by said at least one vehicle, are used for determining the position information. Since the sounds are emitted by the at least one vehicle, no separate emitter for measurement signals is needed. Moreover, detecting sounds is easy and cheap to implement, for example by using microphones or other passive sound detectors.

A corresponding apparatus comprise means for detecting sounds and means for determining position information of at least one vehicle based on said sounds.

As already mentioned, the means for detecting sounds may comprise one or more microphones, preferably a microphone array. Since sounds emitted by the at least one vehicle reach the different microphones of the microphone array at different points in time, for example the direction of said at least one vehicle may be obtained. Such a direction is an example for position information, said position information may also comprise a distance of the at least one vehicle to a predetermined reference point, a velocity of the at least one vehicle and the like.

The method and the apparatus of the this invention may in particular be implemented in an equipped vehicle as part of a safety system. The position information may then be for example used to alert a driver of the equipped vehicle to dangerous situations like overtaking maneuvers or to give the necessary input for an autonomous driving system.

In an embodiment, the determining means comprises a beam former. Beam forming is a method to obtain in particular direction information from sounds received by a microphone array.

In another embodiment, the determining means comprise an artificial neural network for analyzing the sounds. With such an artificial neural network, a complex situation like a sound environment on a street may be analyzed. The artificial neural network may be trained with some typical traffic situations and then is able to correctly recognize similar situations.

In yet another embodiment, the determining means comprise correlation means to perform a correlation operation, e.g. a cross-correlation, of signals from different sound detectors, e.g. different microphones. A pattern analyzer then analyzes the correlation results.

Prior to the correlation operation, a filtering may be used.

It should be noted that a beam former, an artificial neural network and/or correlation means with a pattern analyzer may also be present in combination.

In an embodiment, the determining means comprise extracting means for analyzing the sounds and extracting information like sound energy, sound energy per frequency range etc.. These extracted information may be obtained by performing a statistical analysis and then be further processed, for example by the above-mentioned artificial neural network such that the extracting means serve as an input layer for the artificial neural network. In this case, the extracted information which is easy to handle is used for performing the further processing.

Brief description of the drawings

Additional features and characteristics of the present invention will become apparent from the following description of embodiments thereof with reference to the attached drawings, wherein:

Fig. 1 is a schematic diagram of a traffic situation for explaining embodiments of the present invention,

Fig. 2 is a block diagram of a first embodiment of the present invention,

Fig. 3 is a block diagram of a second embodiment of the present invention,

Fig. 4 is a block diagram of a third embodiment of the present invention,

Fig. 5 is a detailed diagram of a forth embodiment corresponding to the third embodiment of Fig. 4,

Fig. 6 is a diagram for explaining the training of an artificial neural network of the embodiments of Figs. 4 and 5, and

Fig. 7 is a block diagram of a fifth embodiment of the present invention.

Detailed description of preferred embodiments

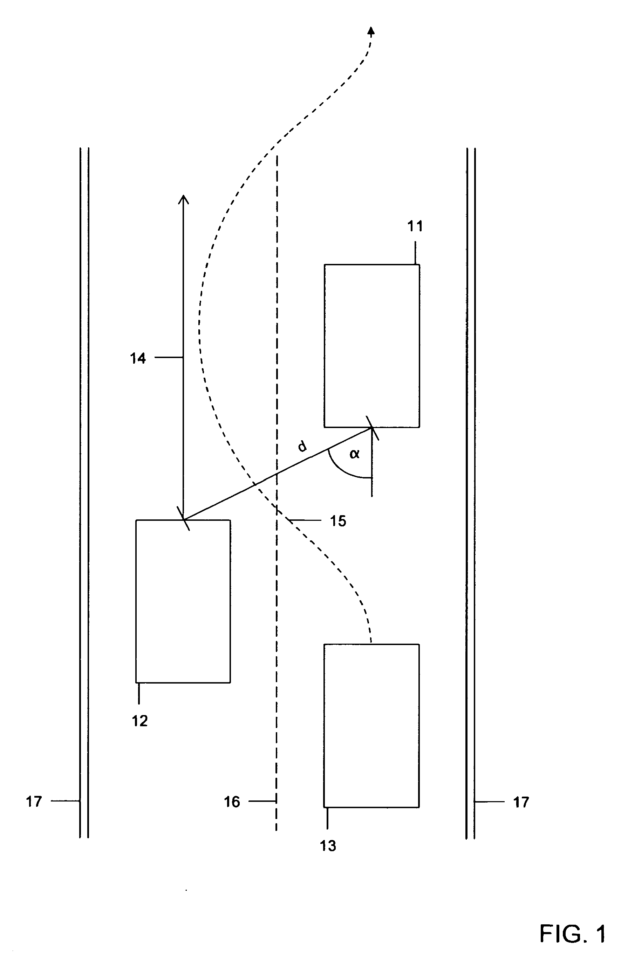

In the following, embodiments of the present invention will be described with reference to the attached drawings. In order to give a better understanding of the purpose and possible applications of the embodiments of apparatuses for determining position information of vehicles described in the following, a application situation will be described with reference to Fig. 1.

The apparatus according to the embodiments which will be described in the following may be installed in a vehicle 11 in order to determine position information of other vehicles. Vehicle 11 in Fig. 1 drives on a right lane of a two-lane road, the two lanes being separated by a lane marking 16 and delimited by boarder lines 17. A vehicle 12 driving on the left lane is overtaking vehicle 11 as indicated by an arrow 14. Another vehicle 13 may also overtake vehicle 11 along a curved line as indicated by a dashed arrow 15.

Vehicle 11 as mentioned is equipped with an apparatus according to an embodiment of the present invention, wherein said apparatus is usable to obtain positioning information regarding other vehicles like vehicle 12 and/or vehicle 13. The position information in this case may in particular reflect the position of vehicle 12 or vehicle 13 relative to vehicle 11. In the example shown in Fig. 1, such a relative vehicle position is measured between the middle of a rear bumper of vehicle 11 and the middle of a front bumper of vehicle 12 (or vehicle 13). The relative position may be expressed by a distance d and an angle $\alpha$ as shown in Fig. 1. It should be noted that any other reference points in vehicle 11 and/or vehicle 12 may be used as well for defining a relative position.

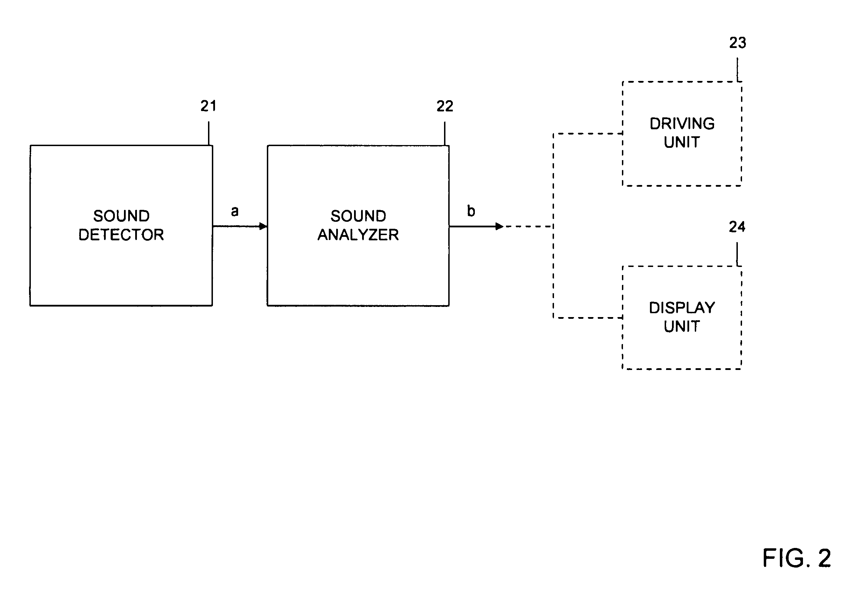

In Fig. 2, a first embodiment of the present invention is shown which serves as a basis for further embodiments which will be discussed later. The embodiment of Fig. 2 may be installed in a vehicle like vehicle 11 of Fig. 1.

The first embodiment of Fig. 2 comprises a sound detector 21 for detecting sounds, in the situation of Fig. 1 sounds in the environment of vehicle 11, in particular sounds emitted by vehicles 12 and/or 13. The detected sounds are converted to at least one sound signal a which is fed to a sound analyzer 22 and which may be an analog or a digital electric signal.

Sound detector 21 may be for example mounted inside vehicle 11 such that noises generated by turbulences and the air stream surrounding vehicle 11 are attenuated or eliminated. Sound detector 21 may also be mounted on an outside of vehicle 11 for example in a bumper, along sides of vehicle 11 and/or at or in at least one exterior mirror of vehicle 11 to receive sounds from other vehicles like vehicle 12 or vehicle 13 more directly and to exclude noises form the interior of the vehicle, for example music from a radio or talk between occupants of vehicle 11. It is also possible to position parts of sound detector 21 on the outside of vehicle 11 and other parts of sound detector 21 inside of vehicle 11 and to determine relevant sounds, for example sounds emitted by vehicles 12 or 13, by comparing the sounds detected by said two parts.

Sound analyzer 22 analyzes the at least one sound signal a and determines position information of at least one vehicle based on the at least one sound signal a. Sound analyzer 22 then outputs at least one position signal b. Position signal b may for example comprise signals indicating distances d and angles $\alpha$ as explained with reference to Fig. 1 for one or more vehicles like vehicles 12 or 13.

The at least one position signal b, as indicated in dashed lines, may then be fed to a driving unit 23 and/or a display unit 24. Driving unit 23 for example controls operation of vehicle 11 based on the at least one position signal b and possibly other signals obtained by further sensors. Display unit 24 displays information to a driver of vehicle 11 based on the at least one position signal b, for example a warning that another vehicle like vehicle 12 is overtaking vehicle 11, possibly together with distance and angle information as shown in Fig. 1. This display may be performed in any manner, for example by an optical display, by emitting warning sounds and the like.

In the following, further embodiments will be discussed giving examples for structures of sound detector 21 and sound analyzer 22 of the first embodiment.

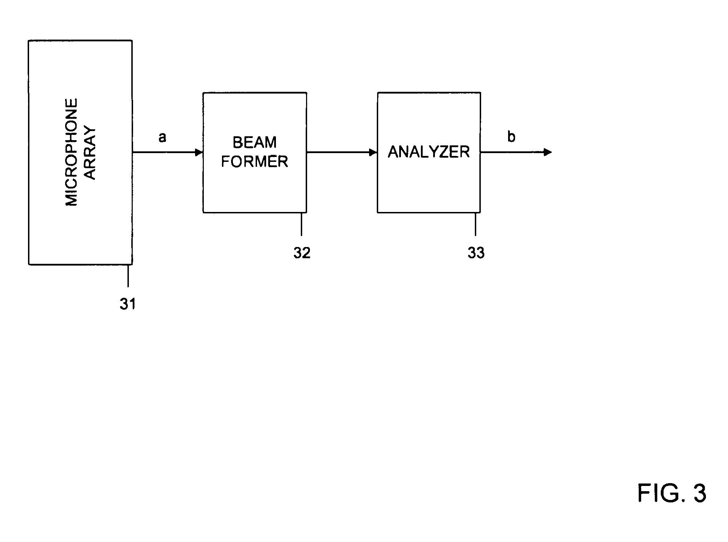

In Fig. 3 a second embodiment of the present invention is shown. In the second embodiment, as sound detector a microphone array 31 is used. Microphone array 31 comprises a plurality of microphones, for example 2-10 microphones. The microphones may be arranged as a linear array, a triangular array, a rectangular array, a circular array etc.. It is also possible that microphone array 31 comprises 2 or more subarrays, each subarray comprising a plurality of microphones arranged in a suitable form like the forms discussed above. The microphone array 31 may be positioned as already discussed for the sound detector 21 of Fig. 2.

Each microphone of microphone array 31 outputs a sound signal a corresponding to the sound detected by the microphone. The sound signals a are fed to a beam former 32 which performs a beam forming operation. Beam forming is a technique for analyzing the output of a microphone array to provide spatial selectivity, or, in other words, to manipulate the signals from the individual microphones and combining them such that sounds coming a desired direction dominate a resulting signal. Conventionally employed types of beam forming are so called delay and sum beam forming, wherein the signal from each microphone is provided with a specific delay and the delayed signal are then added up. Another known type of beam forming is filter and sum beam forming, wherein the signals from the individual microphones are additionally filtered. These and other kinds of beam forming may be employed in beam former 32.

By varying for example the above-mentioned delays or filter coefficients of the filters, an environment of the microphone array can be scanned spatially such that e.g. a distribution of sound energy depending on direction may be obtained. An adaptive tracing of surrounding vehicles may be obtained in this way.

The obtained spatial distribution is then evaluated by an analyzer 33 in order to obtain at least one position signal b. It should be noted that vehicles like vehicles 12 and 13 as shown in Fig. 1 are extended sound sources which usually cannot be approximated by a point source. For example, in case of a car, noise is emitted by the motor, by each of the wheels running on the street, by the air stream around the vehicle etc.. Furthermore, for example in case of the overtaking maneuvers shown in Fig. 1 vehicles 12 and 13 at least at some point may only be in short distance from vehicle 11 where the microphone array of Fig. 3 would for example be located. Therefore, the sound waves reaching the microphone array 31 from vehicles like vehicles 12 and 13 of Fig. 1 cannot necessarily be treated as far field waves.

In other words, beam former 32 yields a broad sound distribution for an individual vehicle like vehicle 12 or vehicle 13. In order to obtain position information, analyzer 33 may for example determine the maximum of such a sound distribution or the "center of mass" of the sound distribution by integrating the sound distribution, and take the direction of this maximum or this center of gravity as a direction of the vehicle, which in case of Fig. 1 corresponds to the angle $\alpha$. This angle $\alpha$ may then be output as position signal b. The sound energy received may also be used as a measure for the distance of the vehicle, which information also may be output as a position signal b.

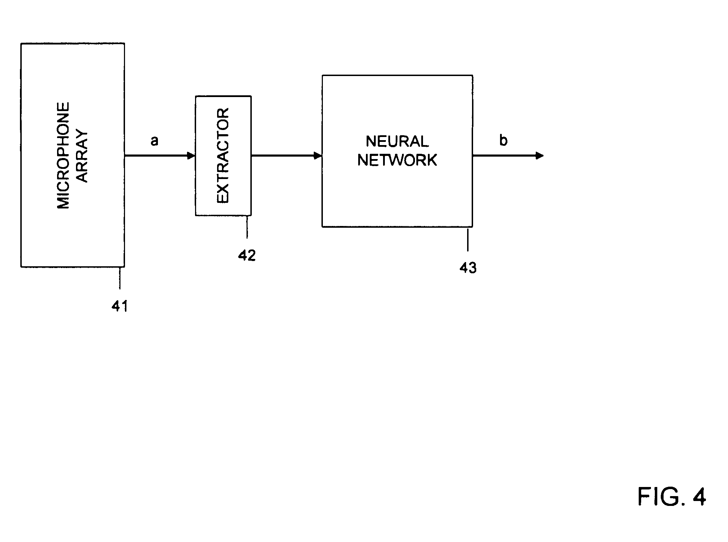

In Fig. 4, a third embodiment of an apparatus of the present invention is shown. Similar to the embodiment of Fig. 3, the microphone array 41 is provided as sound detector for detecting sounds. Microphone array 41 may be configured as already described above for microphone array 31 and produces sound signals a indicative of sounds received by the microphones of the microphone array 41. Sound signals a are then fed to an extractor 42 which serves to extract feature information from sound signals a. For example, extractor 42 may determine the energy corresponding to the sound causing each of the sound signals a and output corresponding signals indicating the energy of the sound received.

Extractor 42 may also determine energy, power or amplitude for a plurality of different frequency ranges and output a corresponding plurality of signals, each signal describing the energy, amplitude, power etc. of a sound signal a output by a microphone of the microphone array for a predetermined frequency range. Extractor 42 may also comprise filters like low pass filters, high pass filters or band pass filters in order to extract a predetermined frequency range from a sound signal a. Such predetermined frequency ranges may be frequency ranges in which sounds or noises emitted by vehicles, for example rolling sounds of tires of vehicles or motor sounds of vehicles, predominantly occur.

Extractor 42 may also comprise a signal processor for analyzing the sound signals a. For example, extractor 42 by using a signal processor like a digital signal processor may perform statistical analysis of the sound signals in order to extract relevant information like energies, frequency ranges etc.. In this respect, it should be noted that the sound signals a, due to the nature of the sounds in the surrounding of a vehicle, are at least partially stochastic signals being a superposition of many individual sounds.

The signals generated by extractor 42 are fed to an artificial neural network 43. "Artificial" here serves to distinguish neural network 43 from natural neural networks as they occur e.g. in brains of animals; the adjective "artificial" will be omitted in the following. In other words, extractor 42 serves as an input layer for neural network 43. Neural networks are a technique for processing a plurality of inputs and extracted information, in this case position information b. Neural networks are particularly suited for recognizing patterns, in the present case sound patterns typical for certain traffic situations like overtaking maneuvers and the like. In this respect, neural networks have the capability of interpolating and classifying patterns.

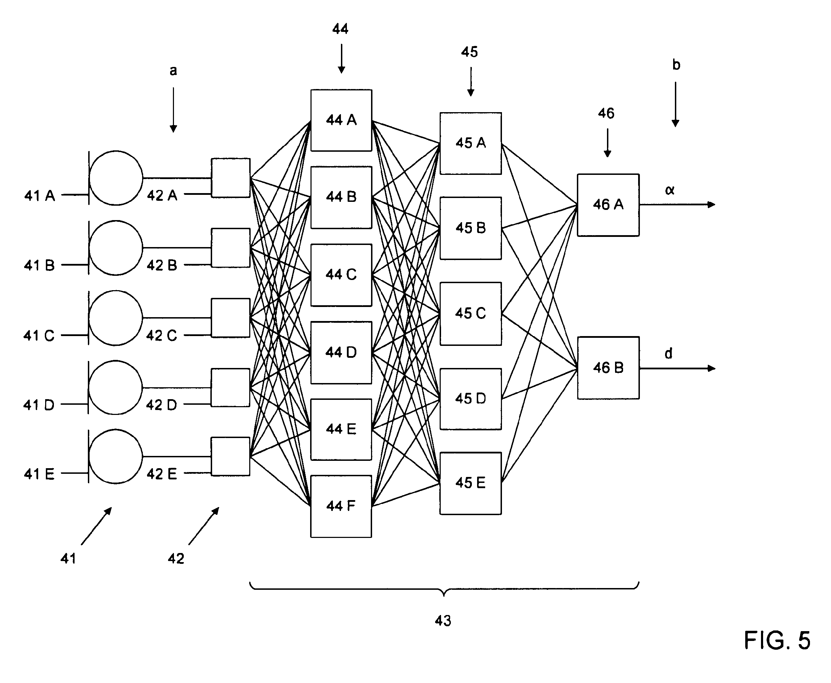

In Fig. 5, a forth embodiment of an apparatus according to the present invention is shown which is a more detailed example of the third embodiment of Fig. 4. In the forth embodiment of Fig. 5, microphone array 41 comprises five microphones 41A-41E. These five microphones 41A-41E in Fig. 5 are arranged in a linear configuration.

Extractor 42 correspondingly comprises five extractor units 42A-42E, wherein each extractor unit is coupled with a respective microphone (for example, extractor unit 42A is coupled with microphone 41A, extractor unit 42B is coupled with microphone 41B etc.). Extractor units 42A-42E work as described previously for extractor 42 of Fig. 4, i.e. they convert the sound signal a received from the respective microphone to one or more signals indicative of properties of the sound signal like energy, energies in predetermined frequency ranges etc.. The extractor units 42A-42E serve as an input layer for neural network 43. Neural network 43 comprises, in the embodiment shown in Fig. 5, a first intermediate layer 44, a second intermediate layer 45 and an output layer 46. The first intermediate layer 44 in the embodiment shown comprises six so called neurons 44A-44F. Each extractor unit 42A-42E is connected with each neuron 44A-44F of the first intermediate layer. In the embodiment, one connection is shown between each extractor unit 42A-42E and each neuron 44A-44F of the first intermediate layer. In case an extractor unit produces more than one signal, for example a first signal indicative of an energy in a first frequency range and a second signal indicative of an energy in a second frequency range, a corresponding number of connections, in the example two connections, may be used between each extractor unit and each neuron of the first intermediate layer.

Each neuron of the first intermediate layer combines the signals received from the extractor units to form an output signal. A common implementation of neurons in neural networks forms a weighted sum of the inputs and applies a function, for a example a sigmoid function, to the result to introduce a non-linearity. For example, neuron 44A could calculate its output $o_{44A}$ according to

$$o_{44A} = f(w_{44A,\,1} \bullet o_{44A,\,2} + w_{44A,\,3} \bullet o_{42C} + w_{44A,\,4} \bullet o_{42D} + w_{44A,\,5} \bullet o_{42E}) \qquad (1)$$

wherein $o_{42A}$ to $o_{42E}$ denote the output signals of extractor units 42A-42E, respectively and $w_{44A}$, i = 1-5 are weight coefficients of neuron 44A. As already mentioned, function f in an embodiment may be a sigmoid function, in particular the logistic function

$$f(x) = (1 + e^{-x})^{-1}$$

an arcus tangent function, an hypobolic tangent function, the error function, but in principal may also be a linear function. Equation (1) has be given as an example for neuron 44A. The remaining neurons 44B-44F of the first intermediate layer may work as neuron 44A, wherein each neuron has individual weight coefficients.

Neurons 45A-45E in the embodiment of Fig. 5 are similar to neurons 44A-44F. However, instead of using the outputs of extractor units 42A-42E, they use the outputs of neurons 44A-44F in order to produce their outputs. Neurons 45A-45E in particular may work according to equation (1), wherein again each neuron has each own weight coefficients w. Neurons 45A-45E may use the same or a different function f than neurons 44A-44F. In principle, it is also possible to use different functions for each neuron.

In the embodiment of Fig. 5, neural network 43 further comprises an output layer 46 with two neurons 46A and 46B. Neuron 46A combines the output signals of the second intermediate layer to form an output signal indicative of the angle $\alpha$ shown in Fig. 1, whereas neuron 46B combines the output signals of neurons 45A-45E of the second intermediate layer 45 to form a signal indicative of the distance d shown in Fig. 1. The output signals of neurons 46A and 46B form position signal b. Neurons 46A and 46B again may work according to equation (1) with the output signals of neurons 45A-45E used instead of the output signals of extractor units 42A-42E. In case of neurons 46A and 46B, as function f a linear function may be used.

It should be noted that the forth embodiment of Fig. 5 is to be taken only as an example of a possible realization of an apparatus comprising a neural network. For example, the number of microphones in the microphone array and the corresponding number of extractor units are not limited to five, but may have any suitable number, for example in the range from 2-10. It should furthermore be noted that the extractor units 42A-42E are not necessarily physically separate units, but may be for example implemented by using a single signal processor.

In general, microphone array 41 or extractor 42 may comprise a analog to digital converter such that the signals then are processed digitally, for example by using a digital signal processor.

The neural network may be implemented in any suitable manner, for example using software running on a general purpose processor, by using an application specific circuit (ASIC) wherein each neuron is implemented as hardware, or any suitable combination thereof. The number of neurons and layers is not limited to the number shown in the example. For example, only one intermediate layer may be used, or more than two intermediate layers may be used. The number of neurons per layer may take any number, for example in the range from 2-15 neurons. Also, while the neural network shown in Fig. 5 is implemented as a so called feed forward network, other types of neural networks may be equally used. The number of neurons in the output layer 46 may be chosen depending on the number of position signals to be determined. For example, if situations with more than one vehicle besides the vehicle equipped with the apparatus should be taken into account, separate output neurons may be provided for each vehicle.

As can be taken from equation (1), the behavior of the neural network 43 is determined by the weight coefficients w of the individual neurons. These weight coefficients are, in an embodiment of the invention, determined by training the neural network. Such training may be performed by so called supervised learning or by so called unsupervised learning. With unsupervised learning, the neural network trains it cells to recognize patterns like overtaking situations. An example for unsupervised learning are self organized Kohonen maps.

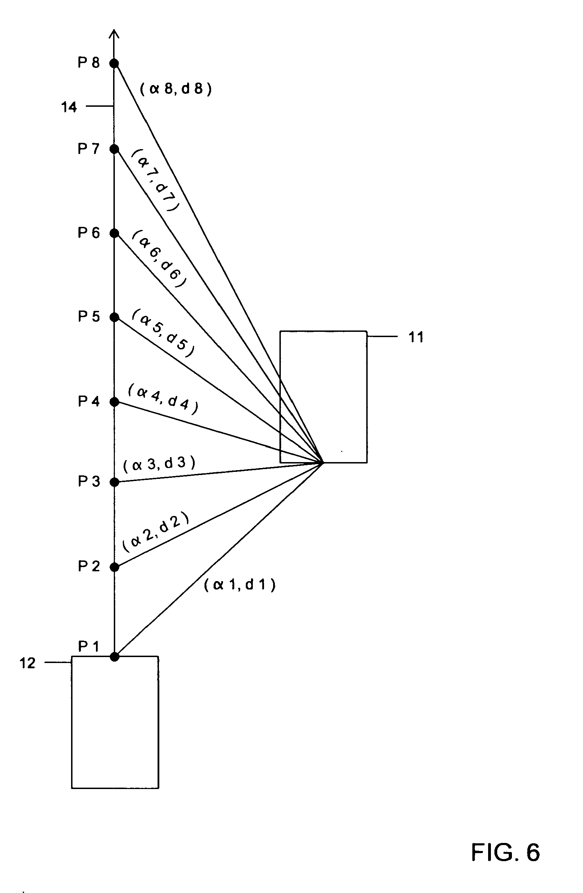

When using supervised learning, inputs are applied to the neural networks wherein the correct outputs are known. The weight coefficients are then adapted to minimize the error between the actual output of the neural network and the correct output. Such a supervised learning will be explained in an exemplary manner with reference to Fig. 6.

Fig. 6, a vehicle 11 equipped with an embodiment of an apparatus of the present invention comprising a neural network, for example the third embodiment of Fig. 4 or the forth embodiment of Fig. 5, is shown. In order to train the neural network, a vehicle 12 passes the vehicle 11 on a predetermined path 14, and in predetermined intervals values of the angle $\alpha$ and the distance d defined in Fig. 1, in the example shown in Fig. 1 at points P1-P8, are measured. The results are denoted $(\alpha1, d1)$-$(\alpha8, d8)$ in Fig. 6. These values are taken as correct values for the training procedure, whereas the sound emitted by vehicle 12 and captured by the microphone array or other sound detector of the apparatus of vehicle 11 are taken as input of the apparatus. The neural network is then trained using conventional methods, for example so called backpropagation, to determine weight coefficients of the individual neurons thereof. In order to improve the capabilities of the neural network, a training like to one explained above with reference to Fig. 6 is performed with a number of different vehicles 12, for example different classes of vehicles like compact cars, upper-class cars, trucks, vans and the like and also for different paths, for example a curved path like path 15 of Fig. 1, a path of a vehicle following vehicle 11, and in general paths on all sides of vehicle 11.

Another possibility for training the neural network is to equip vehicle 11 with an additional apparatus which, for example, using cameras or radars to determine position information, and to use this position information determined by the further apparatus as correct values for the training procedure. After the neural network has been sufficiently trained, the further apparatus may be removed. In this way, the training may be performed just by driving vehicle 11 through common traffic situations.

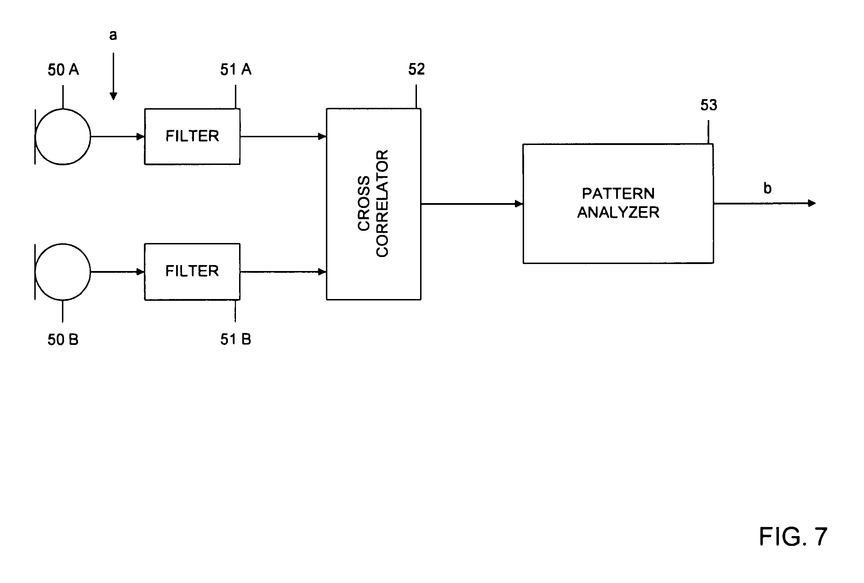

In Fig. 7, a fifth embodiment of the present invention is shown. As sound detector, in the fifth embodiment of Fig. 7 two microphones 50A and 50B are used. In an embodiment, these microphones are arranged on a left side and a right side of a vehicle, respectively. In another embodiment, microphones 50A and 50B are arranged as a small microphone array. However, it is also possible to use more than two microphones and/or at least one microphone array as in the embodiments of Figs. 3-5 in an embodiment like the one shown in Fig. 7.

Microphones 50A and 50B each output sound signals a, wherein, e.g. due to the different spatial position of microphones 50A and 50B the sound signals a output by the two microphones differ from each other. These sound signals are filtered by filters 51A and 51B, respectively, in the embodiment of Fig. 7.

In the embodiment shown, filters 51A and 51B are band-pass filters or filter banks to extract at least one predetermined frequency range from the sound signals a. In the embodiment shown, these frequency ranges are the same for filter 51A and 51B. Preferably, filters 51A and 51B each extract a first frequency range corresponding to aerodynamic sounds, i.e. sounds corresponding to air passing around vehicles, and a second frequency range corresponding to rolling sounds, i.e. sounds of wheels on the road and the like. However, also only one frequency range in each filter or more than two frequency ranges may be used.

The signals generated by filter 51A and 51B are fed to a cross-correlator 52 which performs a cross-correlation operation between signals from filter 51A and 51B corresponding to the same frequency range, for example the signals corresponding to the frequency range of rolling sounds output by filter 51A and 51B. Therefore, correlations between the sounds detected by microphone 50A and the sound detected by microphone 50B are detected. As already mentioned, also more than two microphones may be used, and a corresponding greater number of cross-correlations is formed. A plurality of correlation patterns thus obtained may be combined to one characteristic pattern. Furthermore, other types of correlations than cross-correlations may be used for detecting correlations between the sound signals.

In the case of correlated sounds, when the cross-correlation detected is plotted over time deviations from zero on the correlation axis result when correlations exist. These correlations over time form certain patterns with characteristic maxima. These patterns are analyzed by a pattern analyzer 53 which detects characteristic patterns for example for approaching vehicles, overtaking maneuvers and the like and output the thus-obtained information as position signal b.

In case more than one frequency range is used, these patterns may include separate patterns for each frequency range. Also in this case, these separate patterns may be combined to a single characteristic pattern.

It should be noted that while in the embodiment of Fig. 7 filters 50A, 50B, cross-correlator 52 and pattern analyzer 53 are depicted as separate blocks, two or more of these elements may be integrated together. In particular, the sound signals may be digitized, and the filtering, cross-correlation and pattern analysis may be performed with a single signal processing means.

The cross-correlation performed in cross-correlator 52 may be performed in predetermined time intervals or continuously.

As a matter of course, the invention is not limited to the embodiments explained above. For example, the embodiments shown in Figs. 3 to 7 may be combined in various manners. An extractor like extractor 42 may be provided in the embodiment of Fig. 3 upstream or downstream of the beam former 32. On the other hand, a beam former may be employed in the embodiment of Fig. 4 to perform a preprocessing of the signals before feeding them to extractor 42 and/or neural network 43. In a similar manner, the output of cross-correlator 52 of Fig. 7 may be fed to a neural network. In still another embodiment, at least two different output signals of one or more beam formers, for example obtained by using different microphones, different delays and/or different filter coefficients for beam forming, are fed to cross-correlator 52 of Fig. 7. Also, filters like filters 51A and 51B may be used in the embodiments of Figs. 3 to 5. In yet another embodiment, the embodiment of Fig. 3, the embodiment of Fig. 4 and/or the embodiment of Fig. 7 are implemented in parallel, and the positioning signals output by analyzer 33, neural network 43 and/or pattern analyzer 53 are processed by a further analyzer to yield the final results. Such a further analyzer may for example employ fuzzy logic to classify the results. Combinations of the above variations are also possible.

Furthermore, instead of microphone arrays and microphones as in the embodiments of Fig. 3-7, any other means for converting acoustic waves to electric signals which then may be further processed may be used.

## Claims

1.  A method for determining position information (d, $\alpha$) of at least one vehicle (12, 13), comprising:

    detecting sounds emitted by said at least one vehicle (12, 13), and
    determining said position information of said at least one vehicle (12, 13) based on said sounds.

2.  The method according to claim 1, wherein said detecting step comprises detecting said sounds at a plurality of different positions.

3.  The method according to claim 2,
    wherein said plurality of different positions comprises positions chosen from the group consisting of positions inside a further vehicle (11) and positions on an exterior surface of a further vehicle (11).

**4.** The method according to any one of the preceding claims, wherein said position information indicates a position of said at least one vehicle (12, 13) relative to a further vehicle (11).

**5.** The method according to any one of the preceding claims, wherein said determining step comprises applying beam forming to the detected sounds.

**6.** The method according to any one of the preceding claims, wherein said determining step comprises extracting energy information and/or frequency information from said detected sounds.

**7.** The method according to any one of the preceding claims, wherein said determining step comprises feeding information based on said sounds to an artificial neural network and determining said position information based on an output of said artificial neural network (43).

**8.** The method according to claim 7, further comprising training said artificial neural network (43).

**9.** The method according to claim 8, wherein said training comprises measuring position information of at least one training vehicle (12), detecting sounds of said at least one training vehicle (12) and adjusting the artificial network (43) such that the position information obtained using said artificial neural network (43) and the detected sounds of said at least one training vehicle (12) at least approximately matches said measured position information.

**10.** The method according to any one of the preceding claims, wherein said position information comprises at least one information taken from the group consisting of distance information (d), direction information ($\alpha$), speed information and overtaking information.

**11.** The method according to any one of the preceding claims, wherein said determining step comprises:

correlating said detected sounds, and
performing a pattern analysis based on said correlated sounds.

**12.** The method according to claim 11, further comprising:

filtering said detected sounds prior to said correlating step.

**13.** The method according to claim 12, wherein said filtering comprises a band-pass filtering with at least two different frequency ranges as passbands.

**14.** The method according to any one of the preceding claims, wherein said determining step comprises determining a sound intensity depending on direction, and taking a direction of a maximum of said sound intensity as position information indicating the direction of said vehicle.

**15.** An apparatus for determining position information of a vehicle (12, 13), said apparatus comprising:

sound detecting means (21; 31; 41) for detecting sounds emitted by said vehicle (12, 13), and
determining means (22; 32, 33; 42, 43) for determining position information (b) of said vehicle (12, 13) based on said sounds detected by said detecting means (21; 31; 41).

**16.** The apparatus according to claim 15, wherein said sound detecting means comprise a microphone array (31; 41) having a plurality of microphones (41A-41E).

**17.** The apparatus according to claim 15 or 16, wherein said determining means comprise a beam former (32).

**18.** The apparatus according to any one of claims 15-17, wherein said determining means comprise an artificial neural network (43).

**19.** The apparatus according to claim 18, wherein said artificial neural network (43) comprises, as an input layer, extraction means (42) for extracting information from said sounds detected by said detecting means (21; 31; 41).

20. The apparatus according to claim 18 or 19, wherein said artificial neural network (43) comprises between one and four intermediate layers (44, 45), each intermediate layer (44, 45) comprising between two and ten neurons (44A-44F, 45A-45F).

21. The apparatus according to any one of claims 18-20, wherein said artificial neural network (43) comprises an output layer (46) comprising at least one output neuron (46A, 46B), each output neuron (46A, 46B), outputting a signal (b) indicating a position information of said vehicle.

22. The apparatus according to any one of claims 15-21,
wherein said determining means comprise correlation means (52) for forming a correlation based on said detected sounds.

23. The apparatus according to claim 22,
wherein said determining means comprise a pattern analyzer (53) downstream of said correlation means (52).

24. The apparatus according to any one of claims 15-23,
wherein said determining means further comprise filtering means (51A, 51 B) for filtering said detected sounds.

25. The apparatus according to any one of claims 15-24, wherein the apparatus is adapted to carry out the method according to any one of claims 1-14.

26. A vehicle (11), wherein the vehicle is equipped with an apparatus according to any one of claims 15-25.

27. The vehicle (11) according to claim 26, further comprising displaying means (24) for displaying information based on position information provided by said apparatus (21, 22).

28. The vehicle (11) according to claim 26 or 27, further comprising driving means (23) for controlling operation of said vehicle (11) based on position information provided by said apparatus (21, 22).

FIG. 1

FIG. 2

FIG. 3

MICROPHONE ARRAY

41

a

EXTRACTOR

42

NEURAL NETWORK

43

b

FIG. 4

FIG. 5

FIG. 6

FIG. 7

**European Patent Office**

**EUROPEAN SEARCH REPORT**

Application Number

EP 07 00 9183

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/012475 A (DAIMLER CHRYSLER AG [DE]; SCHLIEP MICHAEL [DE]; TOERGYEKES SZABOLCS [D) 13 February 2003 (2003-02-13) | 1-6, 10-17, 22-26 | INV. G01S3/803 G01V1/00 |
| Y | * the whole document * | 7-9, 18-21 | ADD. G01S13/93 |
| X | EP 1 562 053 A (BOSCH GMBH ROBERT [DE]) 10 August 2005 (2005-08-10)<br><br>* the whole document * | 1-6, 10-17, 22-28 | |
| X | DE 100 60 017 A1 (DAIMLER CHRYSLER AG [DE]) 13 June 2002 (2002-06-13)<br><br>* the whole document * | 1,2,4-6, 10-17, 22-28 | |
| X | DE 102 34 611 A1 (BOSCH GMBH ROBERT [DE]) 19 February 2004 (2004-02-19)<br><br><br>* the whole document * | 1,2,4,6, 10,11, 14,15, 22,23, 25-27 | |
| X | US 2005/195383 A1 (BREED DAVID S [US] ET AL) 8 September 2005 (2005-09-08)<br><br><br>* paragraphs [0432] - [0434], [0436] * | 1,2,4, 6-10, 14-16, 18-21, 25-28 | **TECHNICAL FIELDS SEARCHED (IPC)**<br><br>G01S<br>G01V |
| Y | * paragraphs [0395] - [0411] * | 7-9, 18-21 | |
| Y | US 2003/191568 A1 (BREED DAVID S [US] BREED DAVID S [US] ET AL) 9 October 2003 (2003-10-09)<br>* paragraphs [0558] - [0564]; figure 6 *<br>* paragraphs [0576] - [0592]; figures 9,10 * | 7-9, 18-21 | |

The present search report has been drawn up for all claims

| Place of search | Date of completion of the search | Examiner |
|---|---|---|
| Munich | 28 June 2007 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 00 9183

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2007

| Patent document cited in search report | | Publication date | Patent family member(s) | | Publication date |
|---|---|---|---|---|---|
| WO 03012475 | A | 13-02-2003 | BR | 0211524 A | 14-09-2004 |
| | | | CA | 2456038 A1 | 13-02-2003 |
| | | | DE | 10136981 A1 | 27-02-2003 |
| | | | EP | 1412776 A1 | 28-04-2004 |
| | | | JP | 2004537057 T | 09-12-2004 |
| | | | MX | PA04000895 A | 05-04-2004 |
| | | | US | 2005041529 A1 | 24-02-2005 |
| EP 1562053 | A | 10-08-2005 | DE | 102004005421 A1 | 18-08-2005 |
| DE 10060017 | A1 | 13-06-2002 | NONE | | |
| DE 10234611 | A1 | 19-02-2004 | NONE | | |
| US 2005195383 | A1 | 08-09-2005 | NONE | | |
| US 2003191568 | A1 | 09-10-2003 | NONE | | |

EPO FORM P0459

For more details about this annex : see Official Journal of the European Patent Office, No. 12/82